# EUROPÄISCHE PATENTANMELDUNG

(11) **EP 2 468 443 A1**
(43) Veröffentlichungstag der Anmeldung: **27.06.2012**
(21) Anmeldenummer: 11009943.9
(22) Anmeldetag: 19.12.2011
(51) Int. Cl.: B23K 9/00

(54) **System and Verfahren zum Kommunizieren und Verwalten von Schweissinformation**

(30) Priorität: 22.12.2010 DE 102010055855
(71) Anmelder: Friatec Aktiengesellschaft, 68229 Mannheim (DE)
(72) Erfinder: Baier, Ralf, 68229 Mannheim (DE); Kuntz, Bernd, 76863 Herxheim bei Landau (DE)
(74) Vertreter: Tönhardt, Marion

(57) **Zusammenfassung**

Ein System zum Kommunizieren und Verwalten von Schweißinformation, bestehend aus: mindestens einem Schweißgerät (10) und einer Fernzugriffseinheit (20), wobei zwischen dem mindestens einen Schweißgerät und der Fernzugriffseinheit ein drahtloser Kommunikationskanal eingerichtet ist, wobei das Schweißgerät (10) aufweist: eine Steuerung (12) zum Einstellen von Schweißparametern und zum Sammeln von weiterer Information über den Schweißvorgang; einen Speicher (14) zum Speichern von Daten, nämlich den Schweißparametern und der weiteren Information über den Schweißvorgang; undein Kommunikationsmodul (16) zum Senden und Empfangen von Daten über den drahtlosen Kommunikationskanal; wobei die Fernzugriffseinheit (20) aufweist: ein Kommunikationsmodul (22) zum Empfangen von Daten; ist dadurch gekennzeichnet, dass der Speicher (14) des Schweißgerätes vor einem unberechtigten Zugriff geschützt ist und die Fernzugriffseinheit (20) weiter eine Verarbeitungseinheit (24) zum Aufbereiten der von dem Schweißgerät erhaltenen Daten aufweist, um zumindest eine Dokumentation über den Schweißvorgang zu erstellen. Die Erfindung betrifft außerdem ein Verfahren zum Kommunizieren und Verwalten von Schweißinformation.

## Beschreibung

Die Erfindung betrifft ein System und Verfahren zum Kommunizieren und Verwalten von Schweißinformation. Derartige Systeme und Verfahren dienen insbesondere dazu, Schweißvorgänge lückenlos zu dokumentieren.

Schweißsysteme werden in den unterschiedlichsten Umgebungen eingesetzt. Bekannt ist insbesondere die Autoindustrie, wobei oftmals mehrere Hundert Schweißgeräte im Herstellungsprozess eingesetzt werden, wobei eine ausgereifte Steuer- und Kontrolltechnik erforderlich ist. Diese Systeme sind weiterhin oftmals an ganz unterschiedlichen Orten verteilt, wobei in der Regel an jedem Ort die Information über den Schweißvorgang zur Verfügung stehen muss. Dies betrifft nicht nur Schweißparameter, die für Schweißprozeduren erforderlich sind, sondern auch die Dokumentation. Seit langem ist man daher dazu übergegangen, diese Information über das Internet zu verwalten.

Die WO 2002/103567 A1 offenbart ein System und ein Verfahren zum Verwalten von Schweißinformation, wobei ein Schweißgerät mit einer Fernzugriffseinheit über ein Netzwerk verbunden ist. Zum Beispiel kann das Schweißgerät die Fernzugriffseinheit bitten, nach Schweißinformation, z. B. Schweißprozeduren und/oder -dokumentation, basierend auf bestimmten Parametern, z. B. Schweißparametern und/oder Zeiträumen, zu suchen. Das Netzwerk kann dabei beispielsweise Ethernet (IEEE 802.3), Wireless Ethernet (IEEE 802.11), PPP (Point-to-Point Protocol), Kurzbereichsfunk, WAP, Bluetooth oder andere verwenden. Als Eingabe/Ausgabegerät wird ein PDA (*Personal Digital Assistant)* verwendet, der mit dem Schweißgerät kommuniziert.

Die US 2009/0234483 A1 beschreibt mehrere Schweißgeräte, die miteinander über ein Netzwerk verbunden sind. Zusätzliche Dokumente und Information können softwaremäßig gespeichert werden, z. B. Konstruktionszeichnungen für die zu verschweißenden Werkstücke.

Ganz andere Anforderungen werden an Schweißsysteme gestellt, die im rauen Baustellenbetrieb eingesetzt werden sollen, beispielsweise beim Verlegen von Rohrsystemen in der Gas-Wasser-Versorgung im Abwasser- und im Fernwärmebereich. Die hier verwendeten Rohre bestehen oftmals aus Polyethylen bzw. sind mit einem Mantel aus Polyethylen geschützt, aus vernetztem Polyethylen (PEX), Polyamid, Polypropylen oder faserverstärkten Kunststoffmaterialien wobei Rohrenden miteinander verbunden werden, indem auf diese eine Muffe aufgesetzt wird, die dann elektrisch, beispielsweise mit Hilfe der Heizwendelschweißtechnik, mit den Rohrenden verschweißt wird.

Diverse Schweißgeräte zum Verschweißen von Polyethylen-Rohren mit Muffen sind bekannt.

Ein Heizwendel-Schweißgerät zum Elektroschweißen von Muffen oder Armaturen mit Rohren aus thermoplastischem Kunststoff, das außerdem zum Kommunizieren und Verwalten von Information ausgelegt ist, ist beispielsweise das Schweißgerät FRIAMAT, das unter www.friamat.de in der Bedienungsanleitung FRIAMAT-Schweißgeräte 2320/6, Stand: 01.01.2010, beschrieben ist. Es weist eine Steuerung zum Einstellen von Schweißparametern und zum Sammeln von Information über den Schweißvorgang auf, ferner einen Speicher zum Speichern von Information über den Schweißvorgang. Das Schweißgerät ermöglicht somit das Speichern der schweißtechnischen Parameter, welche einer Auftrags- oder Kommissionsnummer und/oder dem Bedienungspersonal zugeordnet werden können. Die Dokumentation der erfolgten Schweißung erfolgt innerhalb des Schweißgerätes, das etwa 500 Datensätze speichern kann. Diese können, nach dem Anschluss eines Druckers an einer Schnittstelle, ausgedruckt und archiviert werden. Es ist jedoch möglich, die Datenverwaltung mittels einer speziellen Software effizienter zu gestalten. Hierzu werden die Daten mittels eines Memory (USB)-Sticks, einer Memory-Card oder einem anderen Speichermedium aus dem Schweißgerät ausgelesen. Die weitere Verarbeitung und Archivierung erfolgt dann auf einem externen Computer. Die Daten können auch als pdf-Datei beispielsweise auf den Memory-Stick gegeben werden.

Die DE 196 54 122 C1 offenbart, bei einem derartigen Schweißgerät einen Empfänger eines Ortungssystems, wie z. B. eines GPS-Systems, vorzusehen, so dass den Schweißdaten Positionsdaten des Ortungssystems zuordenbar sind.

Ein Gerät für die lokale Datendokumentation ist in dem Artikel "Everything under control", bild+vision, FRONIUS MAGAZINE 2.04 (2004) beschrieben. Eine Fernsteuereinheit ermöglicht es, Schweißdaten lokal auf einer Smartmedia-Karte zu speichern, von der sie dann auf einen Computer übertragen werden. Die Fernsteuereinheit sammelt unter anderem auch die Schweißparameter für Dokumentation und Analyse, kann aber keine Daten über die Prozessumgebung liefern.

Die JP 2002/297707 A befasst sich mit dem Verschweißen von Kunststoffrohren, wobei Parameter für den Schweißvorgang in einem Barcode festgehalten sind, der individuell auf der für die Verschweißung vorgesehenen Muffe angebracht wird. Die Muffe weist eine GPS-Antenne auf, so dass der Schweißort genau festgelegt ist. Information über den Schweißvorgang wird in einem Speicher abgelegt und über das Internet an einen Server übertragen, nachdem der Schweißvorgang beendet ist. Dort wird eine Datenbank aufgebaut, aus der automatisch ein Muffenbericht generiert wird.

Ein weiteres Schweißsystem mit GPS-Funktion ist aus dem Artikel "Neues PE-Schweißgerät mit GPS, automatisiertes Schweißverfahren und Web-Dokumentation", Distributing Energy Efficiency, veröffentlicht bei www.logstor.com (2009), bekannt. Dieses Schweißgerät arbeitet mit einem tragbaren Computer, wiederum mit einem PDA, zusammen, der bei jedem Schweißvorgang für eine vollständige Dokumentation und komplette Daten sorgt, die für die Dokumentation verwendet werden sollen. Der vom System verwendete PDA verfügt über einen eingebauten GPS-Empfänger, durch den die Position jeder angebrachten Muffe registriert werden kann. Über das Satellitensystem kann der GPS-Empfänger die Lokalisierung gewährleisten, sowie Datum und Uhrzeit der ausgeführten Arbeiten angeben. Die Daten werden auf einen Computer übertragen, wo dann der Muffenbericht erstellt und für den Kunden auf einem Web-Server zugänglich gemacht wird.

Die Verwendung einer Fernzugriffseinheit, wie eines PDA, verschafft Vorteile bei der Dateneingabe. Beim FRIAMAT-Schweißgerät ist eine Tastatur vorgesehen, mit der Daten, z.B. Schweißdaten, Anwenderdaten, Verlegerdaten, Umweltdaten, zusammengefasst als Anwendungsdaten, menügeführt in das Schweißgerät eingegeben werden können. Obwohl dies extrem benutzerfreundlich ist, ist aufwändige Software erforderlich, wenn davon ausgegangen wird, dass das Schweißgerät international eingesetzt werden soll. Das FRIAMAT-Schweißgerät stellt 23 verschiedene Sprachen bereit, in der erklärungsbedürftige Funktionen vermittelt werden. Das Auslagern der Dateneingabe an einen PDA eröffnet die Möglichkeit, die Infrastruktur der Welt der Personal Computer zu nutzen. Das eigentliche Schweißgerät braucht dann nur Piktogramme zu enthalten, die selbsterklärend sind.

Aus diesem Grund wird außerdem angestrebt, dass das Schweißgerät selbst nicht mehr protokollieren soll. Damit wird der Hardwareaufwand beträchtlich verringert.

Im rauen Baustellenbetrieb kann nicht ausgeschlossen werden, dass der PDA beschädigt oder zerstört wird oder verloren wird. Um dennoch das Erfordernis der Dokumentation erfüllen zu können, werden im Stand der Technik sämtliche Daten automatisch an einen Webserver übertragen, so dass jeder Kunde hier die Dokumentation für die ausgeführten Schweißarbeiten unabhängig vom PDA einsehen kann.

Es ist die Aufgabe der Erfindung, ein System und ein Verfahren zum Kommunizieren und Verwalten von Schweißinformation bereit zu stellen, die einfach und robust sind und eine hohe Datensicherheit gewährleisten. Dabei sollen das System und das Verfahren unabhängig von Internet-basierten Kommunikationsvorgängen arbeiten können.

Diese Aufgabe wird durch ein System nach Anspruch 1 und ein Verfahren nach Anspruch 8 gelöst. Vorteilhafte Ausgestaltungen sind Gegenstand der Unteransprüche.

Erfindungsgemäß wird ein System zum Kommunizieren und Verwalten von Schweißinformation zur Verfügung gestellt, das aus mindestens einem Schweißgerät und einer Fernzugriffseinheit besteht, wobei zwischen dem mindestens einem Schweißgerät und der Fernzugriffseinheit ein drahtloser Kommunikationskanal eingerichtet ist. Das Schweißgerät weist dabei eine Steuerung zum Einstellen von Schweißparametern und zum Sammeln von relevanter Information über den Schweißvorgang und Anwendungsdaten sowie einen Speicher zum Speichern von Information über den Schweißvorgang auf. Dieser Speicher ist so gestaltet, dass er vor einem unberechtigten Zugriff geschützt ist. Das Schweißgerät umfasst weiterhin ein Kommunikationsmodul zum Senden und Empfangen von Daten über den drahtlosen Kommunikationskanal. Die Fernzugriffseinheit umfasst ein Kommunikationsmodul zum Empfangen von Daten über den drahtlosen Kommunikationskanal, einen Speicher sowie eine Verarbeitungseinheit zum Aufbereiten der von dem Schweißgerät erhaltenen Information, um zumindest eine Dokumentation über den Schweißvorgang zu erstellen.

Das Schweißgerät enthält also weiterhin alle Daten, wenn diese auch für den Bediener nicht sichtbar sind und auch nicht sichtbar sein sollen. Dies hat aber den großen Vorteil, dass mehrere Schweißprozesse gleichzeitig ablaufen können, da die Schweißparameter im jeweiligen Schweißgerät vorhanden sind. Die Fernzugriffseinheit soll zunächst dabei den Schweißvorgang nur ein- oder ausschalten. Der bisher verwendete Schweiß-Barcode, der auf jeder zu schweißenden Muffe angebracht ist und die Schweißparameter definiert, soll erhalten bleiben, ebenso wie der Traceability-Barcode. Gegebenenfalls wird ein Transponder bzw. ein RFID, die die Schweißparameter enthalten, verwendet.

Vorzugsweise ist die Fernzugriffseinheit ein Mobiltelefon oder Handy mit Web-Zugriff oder ein Smartphone oder Bedientableau mit integrierter Web-Konnektivität, so dass ein Zugang zum Internet möglich ist, der zum Aktualisieren der vorhandenen Software oder zur Fernwartung der Geräte genutzt werden kann.

Nach einer bevorzugten Ausführungsform ist in die Fernzugriffseinheit eine Kamera integriert, so dass Fotos von der Baustelle, von verlegten Rohren, Vorabsituationen aufgenommen und direkt dem Muffenbericht zugeordnet werden können. Dies bietet auch dann Vorteile, wenn der Barcode beschädigt ist. Mit der Kamerafunktion kann der beschädigte Barcode fotografiert werden, ein Ersatzcode kann auf ein Handy verschickt werden. Die Kamera kann außerdem als Barcode-Scanner genutzt werden.

Ebenfalls bevorzugt weist die Fernzugriffseinheit ein Ortungsmodul, beispielsweise ein GPS-Modul, oder eine Verbindung zu einem Ortungsmodul auf. Da sich der Bediener der Fernzugriffseinheit in der Regel unmittelbar an der zu verschweißenden Muffe befindet, kann der Ort der Schweißung ausreichend präzise festgelegt werden. Die Verbindung zum Ortungsmodul kann beispielsweise über den Kommunikationskanal eingerichtet werden.

Der Speicher der Fernzugriffseinheit kann eine Datenbank beherbergen. Ferner kann sie als vollständige Fernbedienungseinheit gestaltet sein, mit der Möglichkeit, z.B. Schweißparameter zu verschicken und an externe Datenbanksysteme auszugeben.

Der Kommunikationskanal stellt vorzugsweise eine Verbindung nach dem Standard Bluetooth dar. Bluetooth ist in der Lage, ein Piconet aufzubauen und kann mit mehreren Partnern gleichzeitig kommunizieren, so dass gleichzeitig mehrere Geräte mit mehreren verschiedenen Prozessen ansteuerbar sind. Andere Kommunikationskanäle, wie WLAN, sind gleichermaßen möglich.

Es wurde schon angesprochen, dass die Schweißparameter entweder in einem Barcode oder einem RFID bzw. Transponder enthalten sind. Demzufolge umfasst vorzugsweise die Fernzugriffseinheit im einen Fall eine Barcode-Leseeinheit, im anderen Fall eine RFID-Sende-und Empfangseinheit.

Nach einer bevorzugten Ausführungsform soll die Fernzugriffseinheit kabellos am Schweißgerät zu laden sein. Dieses bietet auch eine Notbetriebsfunktion, da die Fernzugriffseinheit unabhängig vom internen Akku arbeiten kann. Dazu weist das Schweißgerät eine entsprechend ausgelegte Ladestation auf. Derartige Ladestationen, die kabellos Energie übertragen, sind bekannt. Allerdings wird die Möglichkeit, Kontakt- oder kabelgebunden zu laden, vorzugsweise beibehalten.

Die Erfindung stellt weiterhin ein Verfahren zum Kommunizieren und Verwalten von Schweißinformation zur Verfügung, das die Schritte Bereitstellen eines drahtlosen Kommunikationskanals zwischen mindestens einem Schweißgerät und einer Fernzugriffseinheit, Erlangen von Daten, nämlich Schweißparametern und weiterer Information über den Schweißvorgang, so wie Anwendungsdaten, Traceability-Daten, Supervisor-Daten, Senden der erlangten Daten über den Kommunikationskanal an die Fernzugriffseinheit und Speichern der erlangten Daten in einem Speicher des Schweißgerätes und in einem Speicher der Fernzugriffseinheit aufweist und durch das Schützen des Speichers vor einem unberechtigten Zugriff und das Aufbereiten der Daten in der Fernzugriffseinheit, um zumindest eine Dokumentation über den Schweißvorgang zu erstellen, gekennzeichnet ist.

Bevorzugt werden nur dann, wenn im Schweißgerät ein Freischaltcode für den Speicher empfangen wird, die erlangten Daten erneut über den Kommunikationskanal gesendet. Dieses bedeutet, dass bei einer verlorenen oder zerstörten Fernzugriffseinheit der Speicher im Schweißgerät mittels eines beispielsweise über Handy zu verschickenden Codes freigeschaltet werden kann, so dass die Daten erneut an eine andere Fernzugriffseinheit geschickt werden können, sie also nicht verloren sind. Ein Freischaltcode kann außerdem genutzt werden, um andere Basis-Schweißgeräte entsprechend zu steuern.

Im Folgenden soll die Erfindung anhand der beigefügten Zeichnung näher erläutert werden. Es zeigt:
- Figur 1: eine schematische Darstellung eines Systems zum Kommunizieren und Verwalten von Schweißinformation gemäß der vorliegenden Erfindung; und
- Figur 2: eine schematische Darstellung einer Fernzugriffseinheit mit ihren Komponenten.

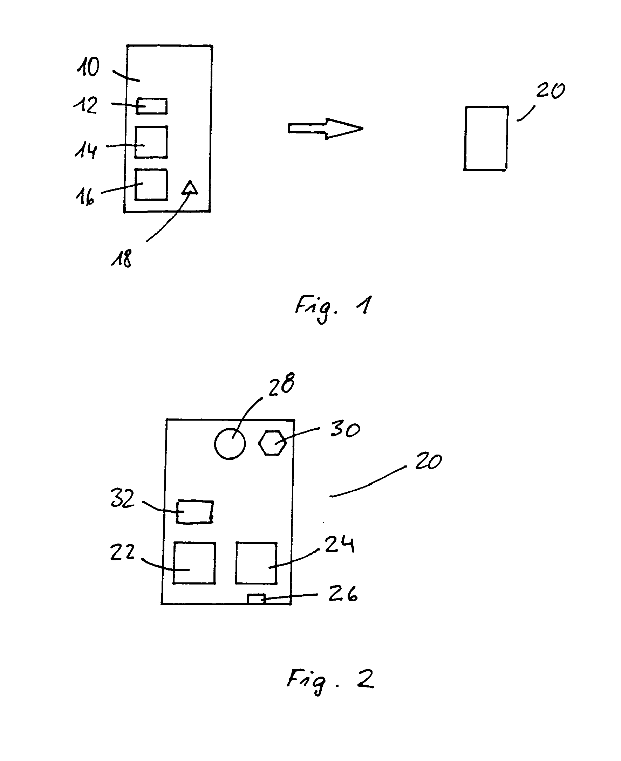

Figur 1 zeigt in schematischer Darstellung ein Schweißgerät 10, das über einen als Pfeil dargestellten Kommunikationskanal mit einer Fernzugriffseinheit 20 kommunizieren kann. Das Schweißgerät 10 umfasst eine Steuerung 12, die Schweißparameter zur Steuerung eines Schweißvorganges benutzt. Die Schweißparameter sind dabei durch einen an beispielsweise einer Muffe fest angebrachten Barcode definiert, der mittels eines üblichen Barcode-Lesers gelesen wird, welcher dann die Daten an die Steuerung 12 überträgt. Diese Barcode-Lesefunktion kann auch von dem Schweißgerät 10 selbst oder von der Fernzugriffseinheit 20 übernommen werden. Überdies kann der Barcode gegebenenfalls durch einen Transponder oder einen RFID ersetzt werden. Die Steuerung 12 sammelt weiterhin Information über den Schweißvorgang, beispielsweise über den Schweißverlauf, Zeit, Temperatur, Strom, Leistung usw. Alle diese erlangten Daten werden einerseits über den Kommunikationskanal an die Fernzugriffseinheit 20 gesendet, andererseits in einem Speicher 14 im Schweißgerät 10 abgelegt. Auf den Speicher 14 kann im Normalfall nicht zugegriffen werden. Es bedarf dazu einer Autorisierung, beispielsweise über einen Freischaltcode, der z. B. manuell über eine (nicht dargestellte) Tastatur in das Schweißgerät 10 eingegeben wird. Erst dann ist das Schweißgerät 10 in der Lage, die in dem Speicher 14 befindlichen Daten erneut zu senden. Für den Sendevorgang bedient sich das Schweißgerät 10 eines Kommunikationsmoduls 16. Das Kommunikationsmodul 16 kann nachrüstbar sein, so dass ein standardmäßiges Schweißgerät mit den Funktionen gemäß der vorliegenden Erfindung nachträglich versehen werden kann. Im Schweißgerät 10 ist ferner eine gegebenenfalls ebenfalls nachträglich einzubauende Ladestation 18 vorgesehen, über die die Fernzugriffseinheit 20 kabellos aufzuladen ist.

Figur 2 zeigt in schematischer Darstellung den Aufbau einer Fernzugriffseinheit 20. Diese umfasst ein Kommunikationsmodul 22, mit dem Daten von dem Schweißgerät über den Kommunikationskanal empfangen und in einem Speicher 32 gespeichert werden. Eine Verarbeitungseinheit 24 bereitet die von dem Schweißgerät erhaltenen Daten auf, um mindestens eine Dokumentation über den Schweißvorgang zu erstellen. Die Dokumentation wird über eine Ausgabeschnittstelle 26 beispielsweise an einen Drucker übergeben. Möglich ist auch, dass die Ausgabeschnittstelle 26 Sendefunktion hat, so dass eine Fernübertragung der Dokumentation oder auch Teilen davon möglich ist. Eine in der Fernzugriffseinheit 20 enthaltene Kamera 28 wird verwendet, um der Dokumentation für den Schweißvorgang relevante Fotos beifügen zu können. Die Kamera 28 kann außerdem eine Scanner-Funktion enthalten. Mit der Kamera 28 kann auch beispielsweise ein beschädigter Barcode auf der zu verschweißenden Komponente fotografiert und über die Ausgabeschnittstelle 26 mit Sendefunktion verschickt werden. Ein weiter in der Fernzugriffseinheit 20 enthaltenes GPS-Modul 30 liefert Ortsdaten für den Ort der Schweißung. Diese können auch erlangt werden, indem über den Kommunikationskanal eine Verbindung zu einem GPS-Empfänger eingerichtet wird.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. System zum Kommunizieren und Verwalten von Schweißinformation, bestehend aus:
mindestens einem Schweißgerät (10) und einer Fernzugriffseinheit (20), wobei zwischen dem mindestens einen Schweißgerät und der Fernzugriffseinheit ein drahtloser Kommunikationskanal eingerichtet ist,
wobei das Schweißgerät (10) aufweist:
eine Steuerung (12) zum Einstellen von Schweißparametern und zum Sammeln von weiterer Information über den Schweißvorgang;
einen Speicher (14) zum Speichern von Daten, nämlich den Schweißparametern und der weiteren Information über den Schweißvorgang; und
ein Kommunikationsmodul (16) zum Senden und Empfangen von Daten über den drahtlosen Kommunikationskanal;
wobei die Fernzugriffseinheit (20) aufweist:
ein Kommunikationsmodul (22) zum Empfangen von Daten und einen Speicher (32);
**dadurch gekennzeichnet, dass** der Speicher (14) des Schweißgerätes vor einem unberechtigten Zugriff geschützt ist und
die Fernzugriffseinheit (20) weiter eine Verarbeitungseinheit (24) zum Aufbereiten der von dem Schweißgerät erhaltenen Daten aufweist, um zumindest eine Dokumentation über den Schweißvorgang zu erstellen.

2. System nach Anspruch 1, **dadurch gekennzeichnet, dass** die Fernzugriffseinheit (20) ein Mobiltelefon mit Web-Zugriff oder ein Smartphone oder Bedientableau mit integrierter Web-Konnektivität ist.

3. System nach Anspruch 1, **dadurch gekennzeichnet, dass** die Fernzugriffseinheit (20) eine Kamera (28) aufweist.

4. System nach Anspruch 1, **dadurch gekennzeichnet, dass** die Fernzugriffseinheit (20) ein Ortungsmodul (30) aufweist.

5. System nach Anspruch 1, **dadurch gekennzeichnet, dass** der Speicher (32) der Fernzugriffseinheit (20) eine Datenbank beherbergt.

6. System nach Anspruch 1, **dadurch gekennzeichnet, dass** die Fernzugriffseinheit (20) als Fernbedienungseinheit ausgestaltet ist.

7. System nach Anspruch 1, **dadurch gekennzeichnet, dass** der Kommunikationskanal eine Verbindung nach dem Standard Bluetooth darstellt.

8. System nach Anspruch 1, **dadurch gekennzeichnet, dass** die Fernzugriffseinheit (20) eine Barcode-Leseeinheit umfasst.

9. System nach Anspruch 1, **dadurch gekennzeichnet, dass** die Fernzugriffseinheit (20) eine RFID-Sende- und Empfangseinheit umfasst.

10. System nach Anspruch 1, **dadurch gekennzeichnet, dass** das Schweißgerät (10) eine Ladestation (18) aufweist, über die die Fernzugriffseinheit (20) kabellos, kabelgebunden oder kontaktgebunden mit Energie zu versorgen ist.

11. Verfahren zum Kommunizieren und Verwalten von Schweißinformation, mit den Schritten:
- Bereitstellen eines drahtlosen Kommunikationskanals zwischen mindestens einem Schweißgerät (10) und einer Fernzugriffseinheit (20);
- Erlangen von Daten, nämlich Schweißparametern und weiterer Information über den Schweißvorgang;
- Senden der erlangten Daten über den Kommunikationskanal an die Fernzugriffseinheit; und
- Speichern der erlangten Daten in einem Speicher (14) des Schweißgerätes,
- Speichern der erlangten Daten in einem Speicher (32) der Fernzugriffseinheit (20);
**gekennzeichnet durch**
- Schützen des Speichers (14) vor einem unberechtigten Zugriff; und
- Aufbereiten der Daten in der Fernzugriffseinheit (20), um zumindest eine Dokumentation über den Schweißvorgang zu erstellen.

12. Verfahren nach Anspruch 11, **dadurch gekennzeichnet, dass** nur dann, wenn im Schweißgerät ein Freischaltcode für den Speicher (14) empfangen wird, die erlangten Daten erneut über den Kommunikationskanal gesendet werden.

13. Verfahren nach Anspruch 11 und 12, **dadurch gekennzeichnet, dass** mittels eines Freischaltcodes mindestens ein zusätzliches Schweißgerät aktiviert ist.
